# EUROPÄISCHE PATENTSCHRIFT

(11) **EP 0 614 639 B1**
(45) Veröffentlichungstag und Bekanntmachung des Hinweises auf die Patenterteilung: **27.12.1995**
(21) Anmeldenummer: 94103580.0
(22) Anmeldetag: 08.03.1994
(51) Int. Cl.: A47J 27/09, A47J 27/08

(54) **Dampfdruckkochtopf mit Bajonettverschluss**
Pressure cooking vessel with bayonet closing system
Appareil de cuisson sous pression avec un système de verrouillage à baionette

(30) Priorität: 12.03.1993 DE 4307960
(43) Veröffentlichungstag der Anmeldung: 14.09.1994
(73) Patentinhaber: SILIT-WERKE GMBH & CO. KG, D-88499 Riedlingen (DE)
(72) Erfinder: Fingerle, Hans, D-88499 Riedlingen/Württ. (DE); Schalong, Heinz, D-88521 Ertingen (DE); Morath, Stefan, D-88499 Riedlingen-Daugendorf (DE)
(74) Vertreter: Goddar, Heinz J., Dr.

(56) Entgegenhaltungen:
- EP-A- 0 123 197
- EP-A- 0 504 830
- WO-A-85/03851
- DE-A- 2 352 389

## Beschreibung

Die Erfindung betrifft einen Dampfdruckkochtopf mit aufeinander verdrehbaren und nach Art eines Bajonettverschlusses miteinander zu verbindenden Topf- und Deckelteilen, und miteinander verriegelbaren Topf- und Deckelhandgriffen gemäß dem Oberbegriff von Patentanspruch 1.

Bei einem in der DE-PS 23 52 389 beschriebenen Dampfdruckkochtopf dieser Art ist es bekannt, den Überdruck im Topfinnenraum mit einem Anzeige- oder Signalorgan anzuzeigen. Dieses Anzeige- oder Signalorgan besteht aus einem Anzeigestift, der von dem im Inneren des Dampfdruckkochtopfes herrschenden Druck und gegen die Wirkung einer Feder mehr oder weniger hoch über die Oberfläche des Deckels oder des Deckelgriffes herausgedrückt werden kann.

An zwei dann nacheinander sichtbar werdenden Markierungsnuten kann abgelesen werden, ob im Topfinneren ein mittlerer Betriebsdruck oder ein höherer bzw. ein maximaler Betriebsdruck herrscht. Gleichzeitig dient dieses Anzeige- oder Signalorgan der optischen Warnung vor einem vorzeitigen Öffnen des Topfes.

Eine weitere Einrichtung an diesem Dampfdruckkochtopf, die u.a. der Sicherheit des Benutzers dient, ist ein einstellbares Druckbegrenzungsventil. Dieses Ventil gewährleistet einerseits, daß ein maximaler Betriebswert nicht überschritten werden kann, und ermöglicht andererseits ein schnelles "Abdampfen" beim Entriegeln des Dampfdruckkochtopfes, wobei das Austreten einer entsprechenden Dampfmenge hörbar und sichtbar einen noch im Topf herrschenden Dampfdruck erkennen läßt und so ebenfalls vor dem vorzeitigen Öffnens des Topfes warnt.

Trotz dieser Sicherheitseinrichtungen ist das Öffnen eines derartigen Dampfdruckkochtopfes auch bei noch erheblichem Dampfdruck im Topfinneren dann möglich, wenn ein Benutzer die oben beschriebenen Warnungen nicht beachtet.

Aus der EP-A 0 123 197, die zur Bildung des Oberbegriffes von Patentanspruch 1 herangezogen worden ist, ist eine Verriegelungseinrichtung vorgesehen, die verhindert, daß der Deckel unfreiwillig gegenüber dem Topf verdreht wird, während im Topf Überdruck herrscht. Dazu ist ein Ventilgestänge, das mit einem Sicherheitsventil in Verbindung ist, an seinem freien Ende abgewinkelt und ragt im Abstand vom Topfdeckel nach unten aus dem Griff heraus. Auf der Oberseite des Topfgriffes ist eine Führungskurve vorgesehen, die zusammen mit dem abgewinkelten Ende des Gestänges die Verriegelungseinrichtung bildet.

Es ist die Aufgabe der Erfindung, einen Dampfdruckkochtopf zu schaffen, der sensibler als im Stand der Technik erst bei Unterschreiten eines bestimmten Rest-Innendruckes geöffnet werden kann.

Diese Aufgabe wird durch einen Dampfdruckkochtopf mit den Merkmalen von Patentanspruch 1 gelöst.

Eine indirekte drehfeste Verbindung von Topf- und Deckelteil ließe sich dabei beispielsweise in der Weise erzielen, daß ein mit der Membran verbundener Stößel durch die Membranbewegung unter dem Einfluß des Rest-Innendruckes in eine Position gebracht ist, in welcher er eine Entriegelung von Topf- und Deckelteil, z. B. durch eine Relativ-Drehbewegung, verhindert.

Gemäß einer besonders einfachen und vorteilhaften Ausgestaltung der Erfindung ist im Deckelteil des Dampfdruckkochtopfes ein Elastomer-Hohlkörper mit einer flexiblen Membran eingesetzt. Die Membran wird durch den Dampf-Überdruck im Topfinneren nach außen gedrückt. Die Membranbewegung überträgt sich auf einen mit der Membran verbundenen Kipphebel, der in einem Hohlraum im Deckelhandgriff vorgesehen und in eine entsprechende Vertiefung im Topfhandgriff einbringbar ist. Bei einer geeigneten Dimensionierung der Membran und des Kipphebel genügt bereits ein geringer Überdruck von beispielsweise 0,04 bar und weniger im Topfinneren, um den Kipphebel so weit auszulenken, daß er in die Vertiefung im Topfhandgriff eingreift. Dadurch sind Deckel und Topf gegen Verdrehen gesichert, und der Dampfdruckkochtopf läßt sich bereits bei einem geringem Restdruck nicht mehr öffnen.

Besonders vorteilhaft ist dabei, daß bei dieser Einrichtung durch die Verwendung des dicht abschließenden Elastomerkörpers im Deckel keine durchströmten Kanäle oder schlecht zugänglichen Teile mit Dampf oder Kochgut in Berührung kommen, so daß die Reinigung dieser Sicherheitseinrichtung unkompliziert ist. Ferner ist der Kipphebel vorzugsweise so im Deckelhandgriff geführt, daß bei einem Öffnungsversuch keine Kräfte und Momente auf die Lagerung des Kipphebels und den Elastomerkörper einwirken.

Weitere vorteilhafte Ausgestaltungen und Merkmale der Erfindung ergeben sich aus den Unteransprüchen.

Die Erfindung ist im Folgenden an Hand eines bevorzugten Ausführungsbeispieles mit Bezug auf die Zeichnung näher erläutert. Es zeigen:
- Fig. 1: eine Seitenansicht eines Dampfdruckkochtopfes mit aufgesetztem Deckel,
- Fig. 2: eine vergrößerte, teilweise geschnittene Darstellung des Dampfdruckkochtopfes von Fig. 1 im Bereich der Handgriffe und
- Fig. 3: eine nochmals vergrößerte Schnittdarstellung des in den Deckel des Dampfdruckkochtopfes eingesetzten Elastomerkörpers.

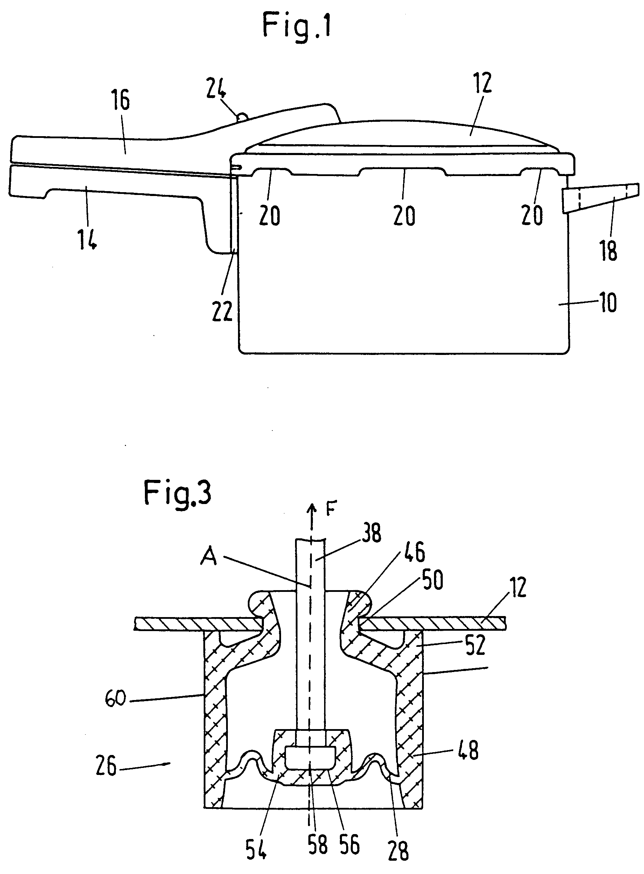

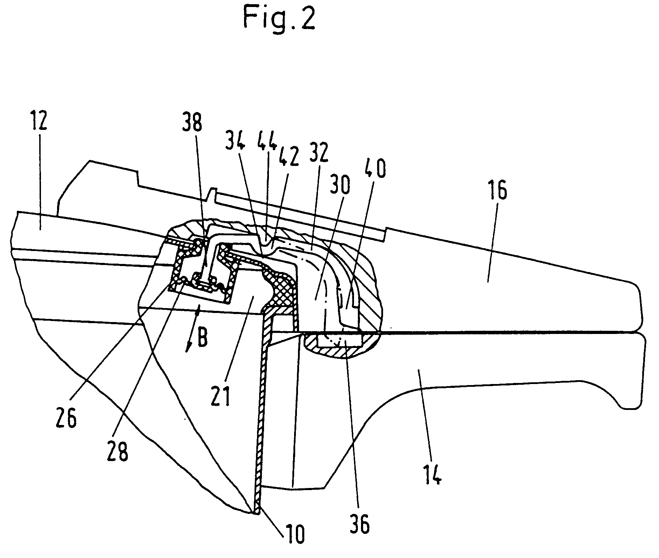

Ein Dampfdruckkochtopf gemäß der Erfindung besteht, wie aus Fig. 1 ersichtlich ist, ganz allgemein aus einem Topf 10, einem Deckel 12, einem Topfhandgriff 14 und einem mit diesem zusammenarbeitenden Deckelhandgriff 16. An dem Topf 10 ist gegenüber dem Topfhandgriff 14 noch ein kleiner Haltegriff 18 befestigt. Der Deckel 12 ist mit nach innen umgebördelten Segmenten 20 versehen, die mit einer Drehung des Deckels 12 relativ zum Topf 10 um die vertikale Mittelachse desselben nach Art eines Bajonetteverschlusses in entsprechende, nach außen umgebördelte Segmente am oberen Topfrand eingreifen. Dabei wird ein in den Deckelrand eingelegter Gummidichtring 21 (Fig. 2) auf den oberen Topfrand gedrückt, wobei der Topf 10 und der Deckel 12 dicht miteinander verbunden werden.

Die Handgriffe 14, 16 und 18 können vorzugsweise aus einem wärmeisolierenden Kunststoff bestehen. Der Topfhandgriff 14 ist mit Hilfe eines an der Topfaußenwand angebrachten Metallrahmens 22, der zumindest teilweise mit einer Flammschutztülle versehen sein kann, an dem Topf befestigt. Der Deckelhandgriff 16 dagegen ist mit dem gewölbten Blechteil des Deckels 12 durch ein Befestigungsmittel verbunden, welches gleichzeitig zur Befestigung bzw. zum Einbau eines Anzeige- oder Signalorgans bekannter Bauart am Deckel dienen kann. Ein solches Anzeige- oder Signalorgan sowie ein einstellbares Überdruckventil, nicht gezeigt, für den Dampfdruckkochtopf sind aus dem Stand der Technik bekannt und beispielsweise in der bereits erwähnten DE-PS 23 52 389 beschrieben. Sie sollen daher an dieser Stelle nicht weiter erläutert werden.

In Fig. 1 ist noch ein am Deckelhandgriff 16 verschiebbarer Steuerknopf 24 zur Einstellung der Kochdruckbegrenzung erkennbar. Dieser Steuerknopf ist ebenfalls in der DE-PS 23 52 389 detailliert beschrieben und soll hier nicht näher erläutert werden.

Fig. 2 zeigt eine vergrößerte, teilweise geschnittene Darstellung des Dampfdruckkochtopfes im Bereich der Handgriffe mit der erfindungsgemäßen Restdruck-Sperrvorrichtung. In Fig. 2 ist ein in den Deckel 12 eingesetzter Elastomerhohlkörper 26 mit einer flexiblen Membran 28 gezeigt. Eine an die Oberseite des Deckels 12 angrenzende Aussparung im Deckelhandgriff 16 bildet einen Hohlraum 30, in dem ein Kipphebel 32 geführt und an einem Kippunkt 34 gelenkig gelagert ist. Der Hohlraum 30 im Deckelhandgriff 16 ist nach unten, zum Topfhandgriff 14 hin geöffnet, und dieser Öffnung gegenüberliegend ist an der Oberseite des Topfhandgriffes 14 eine Ausnehmung 36 vorgesehen. Der Kipphebel 32 umfaßt einen nach unten abgewinkelten Betätigungsschenkel 38, in der Zeichnung links vom Kippunkt 34, und einen zweiten, nach unten abgewinkelten Sperrschenkel 40, in der Zeichnung rechts vom Kippunkt. Am Kippunkt 34 weist der Kipphebel 32 eine Ausbuchtung 42 in Form eines nach oben offenen U's auf, die der Lagerung des Kipphebels auf der Außenseite des Topfdeckels 12 dient. Ein an der Innenseite der Aussparung 30 ausgebildeter Steg 44 ragt von oben in die U-förmige Ausbuchtung 42 des Kipphebels 32 und dient der Stabilisierung der Kipphebel-Lagerung. Das freie Ende des nach unten abgewinkelten Betätigungsschenkels 38 ist mit der Membran 28 nach Art einer Druckknopf-Verbindung lösbar verbunden. Diese Verbindung sowie der Aufbau des die Membran aufweisenden Elastomer-Hohlkörpers 26 sind weiter unten mit Bezug auf Fig. 3 näher erläutert. Der Sperrschenkel 40 des Kipphebels ist abhängig von der Membranbewegung von der in Fig. 2 gezeigten Stellung, bei der der Sperrschenkel vollständig in der Aussparung 30 im Deckelhandgriff liegt, in die in Fig. 2 gestrichelt gezeichnete Stellung bewegbar, in der der Sperrschenkel in die Ausnehmung 36 im Topfhandgriff 14 hineinragt.

Fig. 3 zeigt eine vergrößerte Darstellung des Elastomer-Hohlkörper 26 mit eingeknöpftem Kipphebel. Der Elastomerkörper 26 weist einen sich zu einem Ende 46 hin flaschenhalsartig verjüngenden Zylinder 60 auf, der an seinem anderen Ende 48 durch die Membran 28 abgeschlossen ist. Das flaschenhalsartige Ende 46 des Elastomer-Hohlkörpers 26 kann von innen in ein dafür vorgesehenes Loch 50 im Deckel 12 eingepaßt werden, wobei ein am Elastomerkörper 26 ausgebildeter Flansch 52 für eine zusätzliche Abdichtung des Elastomerkörpers gegen den Deckel 12 vorgesehen ist. In etwa in ihrer Mitte weist die flexible Membran 28 eine Verdickung 54 mit einer darin ausgebildeten Mulde 56 auf, in die das freie Ende 58 des Betätigungsschenkels 38 nach Art einer Druckknopf-Verbindung hineingedrückt werden kann und dort gehalten wird. Dazu ist am Betätigungsende 58 des Kipphebels 32 ein entsprechend geformter Kopf mit etwas größerem Durchmesser als der des Kipphebels 32 selbst vorgesehen.

Im Folgenden ist die Arbeitsweise der erfindungsgemäßen Restdruck-Sperrvorrichtung beschrieben.

Bei Betrieb des Dampfdruckkochtopfes übt der im Topfinneren aufgebaute Dampfdruck eine Kraft F in Pfeilrichtung (Fig. 3) auf die Membran 28 aus. Dadurch wird die Membran nach außen gedrückt. Die Bewegung der Membran 28 überträgt sich auf den mit dieser verbunden Kipphebel 32, der um den Kippunkt 34 in die in Fig 2 strich-punktiert gezeichnete Lage schwenkt, wobei das freie Ende des Sperrschenkels 40 in der Ausnehmung 36 an der Oberseite des Topfhandgriffes zu liegen kommt. Der Pfeil B in Fig. 2 gibt dabei die beiden möglichen Bewegungsrichtungen der Membran und entsprechend des Kipphebels bei steigendem und fallenden Druck im Topfinneren an. Der Steg 44 bildet eine Führung für den Kipphebel, so daß dieser nicht verkanten oder verrutschen kann. Versucht nun ein Benutzer den Dampfdruckkochtopf trotz eines noch vorhandenen Restdrucks zu öffnen, das heißt, versucht er Topf- und Deckelteil gegeneinander zu verdrehen, so verhindert der in die Ausnehmung 36 ragende Sperrschenkel 40 eine solche Drehung. Dabei ist die Lagerung und Führung des Kipphehels im Deckelhandgriff so ausgelegt, daß keine Kräfte und Momente auf die Lagerung, das heißt den Kippunkt 34, oder den Elastomerkörper 26 wirken. Dies wird dadurch erreicht, daß der Betätigungsschenkel 38 im Elastomerkörper nicht nur in Pfeilrichtung B verschiebbar sondern auch um die Mittelachse A (Fig. 3) des Elastomerkörers 26 drehbar gelagert und daß der Kipphebel 12 bei seinem Kippunkt 34 durch den Steg 44 stabilisiert und geführt ist.

Durch eine entsprechende Dimensionierung des Kipphebels, das heißt, Festlegung des Kippunktes relativ zu den Schenkellängen, und der Membrandicke, kann die Auslöse-Empfindlickeit der Restdruck-Sperrvorrichtung vorgegeben werden. Bevorzugt ist eine solche Hebelauslegung, die schon bei einem minimalen Überdruck im Dampfdruckkochtopf, beispielsweise bei einem Innendruck ≦ 0,04 bar, eine zur Auslösung der Sperrvorrichtung ausreichende Auslenkung des Kipphebels bewirkt. Dabei sind mechanisch stabile Lösungen möglich, da die Massen der beiden Schenkel kompensiert werden können.

Die beschriebene Ausführungsform der erfindungsgemäßen Restdruck-Sperrvorrichtung stellt lediglich ein Beispiel für eine solche Sperrvorrichtung dar. Die Membranbewegung läßt sich nicht nur auf den hier beschriebenen Kipphebel übertragen, sondern auch auf andere zur Verriegelung eines Dampfdruckkochtopfes geeignete Elemente. Auch die Anordnung des die Membran enthaltenden Elastomerkörpers und des Verriegelungselementes kann an einer anderen Stelle des Dampfdruckkochtopfes, beispielsweise am Topfteil bzw. im Topfhandgriff oder am Deckel- bzw. am Topfteil erfolgen. Ferner muß die Membran nicht einstückig mit einem Elastomärkörper ausgebildet sein, sondern kann beispielsweise mit einem anderen geeigneten Mittel, wie einem Metallring, am Topf- oder am Deckelteil befestigt sein. Auch die Ausbildung des Elastomerkörpers oder einer entsprechenden, an den, anderen dichtenden Halterung für die Membran kann von der beschriebenen Ausführungsform abweichen.

## Patentansprüche

1. Dampfdruckkochtopf mit aufeinander verdrehbaren und nach Art eines Bajonettverschlusses miteinander zu verbindenden Topf- und Deckelteilen (10, 12), und miteinander verriegelbaren Topf- und Deckenhandgriffen (14, 16), und mit einer Restdruck-Sperrvorrichtung mit einem bewegbaren Verriegelungs-Element (32), das bei Restinnendruck direkt oder indirekt Topf- und Deckelteil drehfest miteinander verbindet, dadurch gekennzeichnet, daß die Restdruck-Sperrvorrichtung eine in den Topf- oder den Deckelteil abdichtend eingesetzte Membran (28) aufweist, wobei die Membranbewegung Druck vom Topfinnenraum nach außen überträgt und das Verriegelungs-Element (32) mit der Membran verbindbar und bewegbar ist.

2. Dampfdruckkochtopf nach Anspruch 1, dadurch gekennzeichnet, daß das Verriegelungs-Element ein an oder in einem der Handgriffe gelagerter Kipphebel (32) ist, dessen einer (Betätigungs-) Schenkel (38) mit der Außenseite der Membran verbindbar und dessen anderer (Sperr-) Schenkel (40) mit dem jeweils anderen Handgriff in Eingriff bringbar ist.

3. Dampfdruckkochtopf nach Anspruch 2, dadurch gekennzeichnet, daß der Kipphebel gelenkig in einem zum Topfhandgriff (14) hin offenen Hohlraum (30) im Deckelhandgriff (16) gelagert ist; und daß der Sperrschenkel (40) des Kipphebels (32) bei einer Betätigung des Kipphebels durch die Membranbewegung aus der Unterseite des Deckelhandgriffs (16) herausführbar und in eine Ausnehmung (36) an der Oberseite des Topfhandgriffes (14) einbringbar ist.

4. Dampfdruckkochtopf nach einem der vorangehenden Ansprüche, dadurch gekennzeichnet, daß die Membran (28) einstückig mit einem abdichtend in den Deckelteil (12) eingesetzten Elastomer-Hohlkörper (26) ausgebildet ist.

5. Dampfdruckkochtopf nach Anspruch 4, dadurch gekennzeichnet, daß die Membran (28) eine flexible, den Elastomer-Hohlkörper (26) abschließende Wand bildet.

6. Dampfdruckkochtopf nach Anspruch 4 oder 5, dadurch gekennzeichnet, daß der Elastomer-Hohlkörper (26) einen Dichtungsflansch (52) aufweist.

7. Dampfdruckkochtopf nach einem der vorangehenden Ansprüche, dadurch gekennzeichnet, daß das Verriegelungs-Element (32) lösbar mit der Membran (28) verbunden ist.

8. Dampfdruckkochtopf nach Anspruch 7, dadurch gekennzeichnet, daß das Verriegelungs-Element (32) und die Membran (28) nach Art einer Druckknopf-Verbindung miteinander verbunden sind, wobei die Membran eine Verdickung (54) mit einer darin ausgebildeten Mulde aufweist, in die das Verriegelungs-Element (32) einknöpfbar ist.

9. Dampfdruckkochtopf nach einem der Ansprüch 2 bis 8, dadurch gekennzeichnet, daß die beiden Schenkel (38, 40) des Kipphebels (32) nach unten abgewinkelt sind.

10. Dampfdruckkochtopf nach Anspruch 9, dadurdch gekennzeichnet, daß der Betätigungschenkel (38) des Kipphebels im wesentlichen senkrecht zum Deckelteil (12) in den Elastomerkörper (26) hineinragt.

11. Dampfdruckkochtopf nach einem der Ansprüche 2 bis 10, dadurch gekennzeichnet, daß der Kipphebel (32) um einen Auflagepunkt (34) kippbar und um sein mit der Membran (28) in Verbindung stehendes Betätigungsende drehbar gelagert ist.

12. Dampfdruckkochtopf nach Anspruch 11, dadurch gekennzeichnet, daß der Kipphebel (12) am Auflagepunkt (34) eine U-förmige, nach oben offene Verformung (42) aufweist.

13. Dampfdruckkochtopf nach einem der Ansprüche 4 oder 12, daduruch gekennzeichnet, daß der Betätigungsschenkel (38) des Kipphebels (32) im Elastomerhohlkörper (26) auf- und abwärts verschiebbar und drehbar geführt ist.

14. Dampfdruckkochtopf nach einem der vorangehenden Ansprüche 2 bis 12, dadurch gekennzeichnet, daß die beiden Schenkel des Kipphebels (32)und die Membrandicke so dimensioniert sind, daß ein Überdruck von ≦ 0,04 bar im Topfinnenraum eine zur Verriegelung von Topf- und Deckelteil ausreichende Auslenkung des Kipphebel bewirkt.

15. Dampfdruckkochtopf nach einem der vorangehenden Ansprüche, gekennzeichnet, durch ein einstellbares Druckbegrenzungsventil.

## Claims

1. A pressure cooker comprising a vessel and a lid (10, 12) rotatable one on another and interconnectable after the fashion of a bayonet fastening and having interlockable vessel and lid hand grips (14, 16) and having a residual pressure locking device having a movable locking element (32) which in the presence of a residual internal pressure in the cooker so interconnects the lid and vessel directly or indirectly as to prevent relative rotation therebetween, characterised in that the residual pressure locking device comprises a diaphragm (28) received sealingly in the vessel or lid, the movement of the diaphragm transmitting pressure from the vessel interior to the exterior, the locking element (32) being connectable to and movable with the diaphragm.

2. A pressure cooker according to claim 1, characterised in that the interlocking element is a tilting lever (32) which is mounted on or in one of the hand grips, one arm (the actuating arm) (38) of the lever (32) being connectable to the outside of the diaphragm while the other (locking) arm (40) is engageable with the respective other hand grip.

3. A pressure cooker according to claim 2, characterised in that the tilting lever is pivotally mounted in a cavity (30) in the lid hand grip (16), the cavity (30) being open towards the vessel hand grip (14), and the locking arm (40) of the lever (32) responds to an actuation of the lever (32) by diaphragm movement by extending from the bottom of the lid hand grip (16) and engaging in a recess (36) on the top of the vessel hand grip (14).

4. A pressure cooker according to any of the previous claims, characterised in that the diaphragm (28) is unitary with a hollow elastomeric member (26) introduced sealingly into the lid (12).

5. A pressure cooker according to claim 4, characterised in that the diaphragm (28) serves as a flexible wall closing the hollow elastomeric member (26).

6. A pressure cooker according to claim 4 or 5, characterised in that the hollow elastomeric member (26) has a sealing flange (52).

7. A pressure cooker according to any of the previous claims, characterised in that the interlocking element (32) is releasably connected to the diaphragm (28).

8. A pressure cooker according to claim 7, characterised in that the interlocking element (32) and the diaphragm (28) are interconnected after the fashion of a press-stud connection, the diaphragm having a thickening (54) formed with a trough into which the interlocking element (32) can be pressed.

9. A pressure cooker according to any of claims 2 to 8, characterised in that the two arms (38, 40) of the lever (32) are bent downwards.

10. A pressure cooker according to claim 9, characterised in that the actuating arm (38) of the tilting lever extends into the elastomeric member (26) substantially perpendicularly to the lid (12).

11. A pressure cooker according to any of claims 2 to 10, characterised in that the tilting lever (32) is tiltable around a fulcrum (34) and is mounted for rotation around its actuating end, the same being connected to the diaphragm (28).

12. A pressure cooker according to claim 11, characterised in that the tilting lever (12) has a U-shaped upwardly open deformation (42) at the fulcrum (34).

13. A pressure cooker according to claim 4 or 12, characterised in that the actuating arm (38) of the tilting lever (32) is guided for vertical reciprocation and for rotation in the hollow elastomeric member (26).

14. A pressure cooker according to any of claims 2 to 12, characterised in that the two arms of the tilting lever (32) and the thickness of the diaphragm are so dimensioned that a positive pressure of ≦ 0.04 bar inside the vessel deflects the tilting lever sufficiently to interlock the vessel and lid.

15. A pressure cooker according to any of the previous claims, characterised by an adjustable pressure-limiting valve.

## Revendications

1. Autocuiseur comportant une partie formant récipient et une partie formant couvercle (10, 12) qui peuvent être tournées l'une par rapport à l'autre et qui doivent être liées par une sorte de système de verrouillage à baïonnette, et comportant des poignées de récipient et de couvercle (14, 16) qui peuvent être verrouillées ensemble, et comportant un dispositif de blocage en cas de pression résiduelle avec un élément de verrouillage (32) mobile qui relie, de manière fixe en rotation, directement ou indirectement, en cas de pression interne résiduelle, la partie formant récipient et la partie formant couvercle, caractérisé en ce que le dispositif de blocage en cas de pression résiduelle comporte une membrane (28) agencée de manière étanche dans la partie formant récipient ou dans la partie formant couvercle, le mouvement de la membrane transmettant la pression de l'intérieur du récipient vers l'extérieur et l'élément de verrouillage (32) pouvant être relié, mobile, à la membrane.

2. Autocuiseur selon la revendication 1, caractérisé en ce que l'élément de verrouillage est un levier oscillant (32) qui est logé sur ou dans une des poignées, dont un côté (d'actionnement) (38) peut être relié à la face extérieure de la membrane et dont l'autre côté (de blocage) (40) peut être amené en prise avec l'autre poignée respective.

3. Autocuiseur selon la revendication 2, caractérisé en ce que le levier oscillant est logé, mobile, dans un espace creux (30), ouvert vers la poignée de récipient (14), dans la poignée de couvercle (16) ; et en ce que le côté de blocage (40) du levier oscillant (32), lorsque le levier oscillant est actionné par le mouvement de la membrane, peut sortir du dessous de la poignée de couvercle (16) et peut rentrer dans un creux (36) situé sur le dessus de la poignée de récipient (14).

4. Autocuiseur selon l'une des revendications précédentes, caractérisé en ce que la membrane (28) est construite d'un seul tenant avec une pièce creuse en élastomère (26) qui est placée, de manière étanche, dans la partie formant couvercle (12).

5. Autocuiseur selon la revendication 4, caractérisé en ce que la membrane (28) forme une paroi souple qui ferme la pièce creuse en élastomère (26).

6. Autocuiseur selon la revendication 4 ou 5, caractérisé en ce que la pièce creuse en élastomère (26) comporte une bride d'étanchéité (52).

7. Autocuiseur selon l'une des revendications précédentes, caractérisé en ce que l'élément de verrouillage (32) est lié, de manière à pouvoir s'en détacher, à la membrane (28).

8. Autocuiseur selon la revendication 7, caractérisé en ce que l'élément de verrouillage (32) et la membrane (28) sont liés à la façon d'une liaison par bouton-pression, la membrane présentant un épaississement (54), avec une cavité, agencée à l'intérieur, dans laquelle l'élément de verrouillage (32) peut être enclenché.

9. Autocuiseur selon l'une des revendications 2 à 8, caractérisé en ce que les deux côtés (38, 40) du levier oscillant (32) sont recourbés vers le bas.

10. Autocuiseur selon la revendication 9, caractérisé en ce que le côté d'actionnement (38) du levier oscillant est enfoncé dans la pièce en élastomère (26) à peu près perpendiculairement à la partie formant couvercle (12).

11. Autocuiseur selon l'une des revendications 2 à 10, caractérisé en ce que le levier oscillant (32) est agencé de manière à pouvoir basculer autour d'un point d'appui (34) et de manière à pouvoir tourner autour de son extrémité d'actionnement qui se trouve en liaison avec la membrane (28).

12. Autocuiseur selon la revendication 11, caractérisé en ce que le levier oscillant (12) comporte au niveau du point d'appui (34) une déformation (42) qui a la forme d'un U et qui est ouverte vers le haut.

13. Autocuiseur selon l'une des revendications 4 ou 12, caractérisé en ce que le côté d'actionnement (38) du levier oscillant (32) est conduit de manière à pouvoir se déplacer en avant et en arrière et à pouvoir tourner dans la pièce creuse en élastomère (26).

14. Autocuiseur selon l'une des revendications précédentes 2 à 12, caractérisé en ce que les deux côtés du levier oscillant (32) et l'épaisseur de la membrane sont dimensionnés de telle sorte qu'une surpression de ≦ 0,04 bar à l'intérieur du récipient provoque une sortie du levier oscillant qui suffit à verrouiller la partie formant récipient et la partie formant couvercle.

15. Autocuiseur selon l'une des revendications précédentes, caractérisé par une soupape réglable de limitation de la pression.
